# EUROPEAN PATENT SPECIFICATION

(11) **EP 3 014 089 B1**
(45) Date of publication and mention of the grant of the patent: **12.06.2019**
(21) Application number: 14847847.2
(22) Date of filing: 12.06.2014
(51) Int. Cl.: G01P 3/00, F01D 17/06, F01D 21/06, F02K 3/06, F01D 21/00

(54) **EXCESSIVE DEFORMATION MONITORING USING A FAN DRIVE GEAR SYSTEM**
ÜBERMÄSSIGE VERFORMUNGSÜBERWACHUNG ANHAND EINES LÜFTERANTRIEBSSYSTEMS
SYSTÈME DE SURVEILLANCE DE DÉFORMATION EXCESSIVE AU MOYEN D'UN SYSTÈME D'ENGRENAGE D'ENTRAÎNEMENT DE SOUFFLANTE

(30) Priority: 24.06.2013 US 201361838409 P
(43) Date of publication of application: 04.05.2016
(73) Proprietor: United Technologies Corporation, Farmington, CT 06032 (US)
(72) Inventor: OTTO, John R., Middletown, Connecticut 06457 (US)
(74) Representative: Dehns
(86) International application number: PCT/US2014/042029
(87) International publication number: WO 2015/047468

(56) References cited:
- WO-A1-2013/151955
- GB-A- 752 009
- GB-A- 2 256 486
- US-A1- 2005 129 498
- US-A1- 2005 129 498
- US-A1- 2008 317 588
- US-A1- 2010 011 740
- US-A1- 2013 054 175
- US-B1- 6 321 525

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the inner shaft. A speed of the low spool and the high spool is measured in different locations to monitor shaft integrity. A difference between measured speeds can be indicative of torsional effects and failure of the spool.

A speed reduction device such as an epicyclical gear assembly may be utilized to drive the fan section such that the fan section may rotate at a speed different than the turbine section to increase overall propulsive efficiency of the engine. In such engine architectures, a shaft driven by one of the turbine sections provides an input to the epicyclical gear assembly that drives the fan section at a reduced speed such that both the turbine section and the fan section can rotate at closer to optimal speeds. The different operating speeds of the gear assembly and the fan section can complicate monitoring of speeds of the low spool driving the fan section.

Turbine engine manufacturers continue to seek improvements to engine performance including improvements to shaft monitoring systems.

A prior art method of controlling a turbofan engine, is disclosed in GB-752009. Another prior art engine and method is disclosed in GB-2256486.

### SUMMARY

The present invention provides a method of controlling a turbofan engine as recited in claim 1, and a turbofan engine as recited in claim 6.

In an embodiment of the foregoing method, the gear reduction ratio is greater than about 2.3.

In a further embodiment of any of the foregoing methods, the rotating shaft includes a low spool shaft coupling a low pressure turbine to a low pressure compressor.

In a further embodiment of any of the foregoing methods, the rotating shaft includes a turbine section directly coupled to drive the geared architecture.

In a further embodiment of any of the foregoing methods, includes measuring the first speed of the rotating shaft at a second location forward of the first location.

In a further embodiment of any of the foregoing methods, the method includes measuring the first speed at both the first location and the second location and determining that the rotating shaft is outside the predefined deformation limits responsive to a difference in measurements at the first location and the second location exceeding a predetermined range.

In a further embodiment of any of the foregoing methods, the predefined deformation limits includes predefined torsion limits.

In an embodiment of the foregoing turbofan engine, the first sensor is mounted proximate the first shaft aft of a geared architecture and a second sensor measuring rotation of the first shaft is mounted at a second location spaced apart from the first location.

In a further embodiment of any of the foregoing turbofan engine, the controller determines the calculated expected difference between the speed of the first shaft and the fan shaft based on a gear reduction ratio provided by the geared architecture.

In a further embodiment of any of the foregoing turbofan engines, the gear reduction ratio is greater than about 2. 3.

In a further embodiment of any of the foregoing turbofan engines, the controller initiates shutdown of the turbofan engine responsive to the determination that one of the rotating shaft and the fan shaft are outside predefined deformation limits.

In a further embodiment of any of the foregoing turbofan engines, the predefined deformation limits comprises predefined torsion limits.

In a further embodiment of any of the foregoing turbofan engines, the engine includes a second sensor measuring a speed of the first shaft at a location different than the first sensor.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example turbofan engine.
Figure 2 is schematic view of the example turbofan engine including an example safety system.

### DETAILED DESCRIPTION

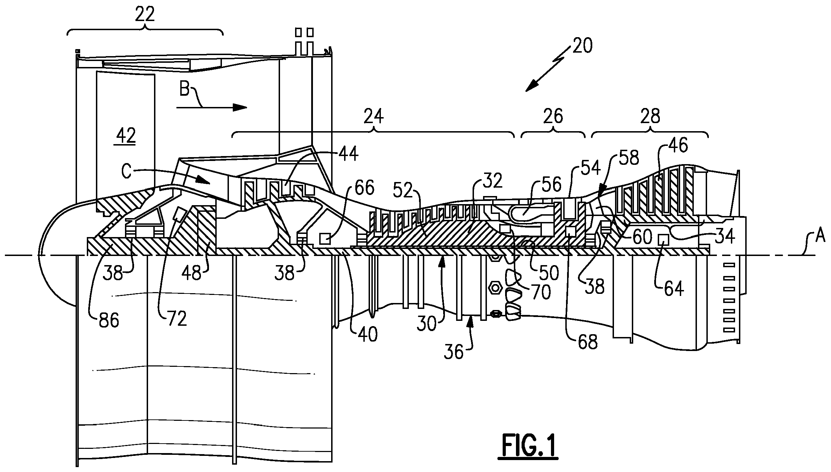

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about five. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by airflow through the bypass flow path B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5} (wherein °R = K x 9/5). The "Low corrected fan tip speed", as disclosed herein according to one non-limiting embodiment, is less than about 1150 ft/second (350.5 m/second).

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

The example turbine engine 20 includes first and second sensors 64 and 66 on the low speed spool 30 and first and second sensors 68, 70 on the high speed spool 32.
The sensors 64, 66, 68 and 70 detect shaft speed at different locations of the corresponding shafts to provide information utilized to monitor and determine shaft health and condition.

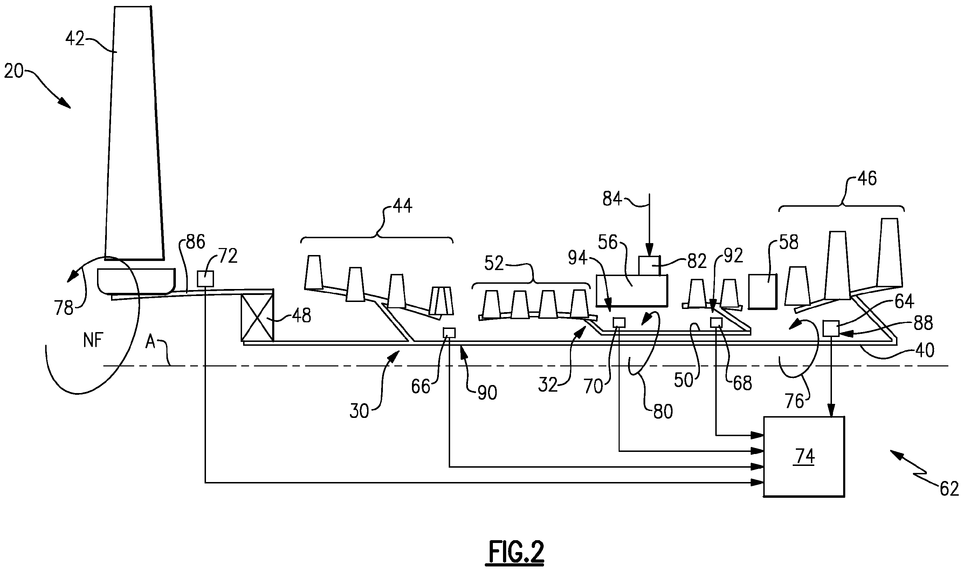

Referring to Figures 1 and 2, the engine 20 includes a control system 62 that receives data indicative of shaft speed from sensors positioned at different locations along each of the low spool 30, the high spool 32 and a fan shaft 86. The low spool 30 includes the low pressure turbine shaft 40 that rotates at a first speed 76. Differences in speed at different locations along the shaft 40 can be indicative of shaft deformation. Such deformation can include torsion, shear, bending or any other deformations that could change operational behavior.

Accordingly, the control system 62 gathers information from sensors at two locations along each of the low pressure shaft 40 and the high pressure shaft 50 and uses that information to detect differences in shaft speed that may be indicative of shaft deformation. Moreover, the control system 62 utilizes a speed 78 of the fan shaft 86 along with the known gear ratio to further detect potential issues with the shaft 40.

A first speed sensor 64 is disposed at an aft portion 88 of the low pressure shaft 40. A second speed sensor 66 is disposed at a forward portion 90 of the shaft 40. Differences in speed measured by the first sensor 64 and the second sensor 66 indicate that some deformation of the shaft 40 is present. Moreover, the high pressure shaft 50 includes a first sensor 68 located at an aft portion 92 and a second sensor 70 located at a forward portion 94 to further detect differences in the high pressure shaft 50.

The example turbofan engine 20 includes the geared architecture 48 for driving the fan 42 at a speed different than the low pressure turbine 46. The example geared architecture 48 drives the fan shaft 86 at a speed different than the low pressure turbine shaft 40. In this example, the low pressure turbine shaft 40 drives the geared architecture 48; however, other shafts could be utilized to drive the geared architecture within the contemplation of this disclosure.

The first speed sensor 64 is disposed at aft portion 88 that is aft of the geared architecture 48 and is at an aft portion of the low pressure turbine 46. The second speed sensor 66 is disposed at the forward portion that is aft of the geared architecture and forward of the combustor 56. A fan shaft sensor 72 is disposed on the fan shaft 86 and detects a speed of the fan shaft 86.

By utilizing the known gear reduction ratio of the geared architecture 48 and thereby the difference in speeds between the low pressure shaft 40 and the fan shaft 86, the speed 78 of the fan shaft 86 is utilized to determine the condition of the shaft 40. A difference in speeds between the fan shaft 86 and the shaft 40 will fall within a predetermined range based on the gear ratio during normal operation. Departure of the difference between the fan shaft 86 and the shaft 40 from the expected difference is utilized along with the first and second sensors 64, 66 to determine if defects are present.

In operation, each of the sensors 64, 66, 68 and 70 communicates information indicative of respective shaft speed to the controller 74. The controller 74 determines a difference between the measured speeds for sensors disposed on a common shaft and compares that with a predetermined limit to differences between the measured speeds. As appreciated, each of the sensors should measure a near identical speed at different locations for a shaft that is operating properly and does not include any defects.

The controller 74 will further determine a calculated difference in speeds between the shaft 40 and the fan shaft 86 based on the speed reduction gear ratio provided by the geared architecture 48. The controller 74 accounts for the relative direction between the shafts 48, 86 in order to determine an expected difference between speeds of the low pressure turbine shaft 40 and the fan shaft 86. If the actual difference in speed is different from the expected difference, the controller 74 will determine that at least one of the low shaft 40 and the fan shaft 86 is experiencing deformation outside of predetermined limits.

In the event that the controller 74 makes a determination based on a difference between the expected difference in shaft speeds and an actual measured difference between shaft speeds, the controller 74 will initiate a shutdown procedure of the engine. In one example, the shutdown procedure can include the utilization of a fuel control valve 82 to cutoff fuel flow 84 to the combustor 56 and thereby shutdown the fan engine 20.

Accordingly, the example safety system 62 operates to control the turbofan engine 20 by first measuring a first speed of the rotating low pressure turbine shaft 40 with at least one of the first sensor 64 and the second sensor 66. The controller 74 further gathers data of fan shaft speed 78 with the speed sensor 72. The controller 74 compares the difference in relative speeds between the low pressure turbine shaft 40 and the fan shaft 86. Because the geared architecture 48 includes a known gear ratio, the relative speed between the low pressure turbine shaft 40 and the fan shaft 86 should be within a predetermined and specified range.

If the measured difference in speeds of the low pressure turbine shaft 40 and the fan shaft 86 are outside of the calculated and expected difference in speeds, the controller 74 will make a determination based on this difference torsion is outside of the predetermined limits has occurred in one of the shaft 40 and the fan shaft 86. In response to such a determination, the controller 74 can initiate engine operations that will prevent engine damage such as a complete engine shut down.

Accordingly, the example system utilizes an additional sensor disposed on the fan shaft along with the known gear reduction ratio provided by the geared architecture to add a further means of monitoring shaft integrity for maintaining engine operation within desired parameters.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A method of controlling a turbofan engine (20), the turbofan engine (20) including a rotating shaft (40) coupling a turbine (28) to a compressor (44) and driving a fan (42) through a geared architecture (48) and a second rotating shaft (50) coupling a high pressure compressor (52) to a high pressure turbine (54), the method comprising:
measuring a first speed of the rotating shaft (40) at a first location aft of the geared architecture (48);
measuring a second speed of a fan drive shaft (86) driven by the geared architecture (48) and rotating at a speed different than the rotating shaft (40);
calculating an expected difference in the speed of the rotating shaft (40) and the fan drive shaft (86) based on a gear ratio of the geared architecture (48);
determining that one of the rotating shaft (40) and the fan drive shaft (86) are outside predefined deformation limits responsive to a difference between an actual difference between the first and second speeds and the calculated expected difference; and
sensing a speed of the second rotating shaft (50) at more than one location and determining a deformation beyond the predefined limit in the second rotating shaft (50) responsive to a difference in measured speed at the more than one locations exceeding a predetermined range.

2. The method as recited in claim 1, wherein the rotating shaft (40) comprises a low spool shaft coupling a low pressure turbine (44) to a low pressure compressor (44).

3. The method as recited in claim 1 or 2, wherein the rotating shaft (40) comprises a turbine section (44) directly coupled to drive the geared architecture (48).

4. The method as recited in claim 1, 2 or 3, including measuring the first speed of the rotating shaft (40) at a second location forward of the first location.

5. The method as recited in claim 4, including measuring the first speed at both the first location and the second location and determining that the rotating shaft (40) is outside the predefined deformation limits responsive to a difference in measurements at the first location and the second location exceeding a predetermined range.

6. A turbofan engine (20) comprising:
a fan (42) including a fan shaft (86) and a plurality of fan blades rotatable about an axis (A);
a combustor (56) in fluid communication with a compressor section (44);
a turbine section (46) in fluid communication with the combustor (56), the turbine section (46) driving a first shaft (40) with the first shaft (40) providing a coupling between the turbine section (46) and a compressor section (44);
a second rotating shaft (50) coupling a high pressure compressor (52) to a high pressure turbine (54);
a geared architecture (48) driven by the first shaft (40) for rotating the fan (42) about the axis (A);
a first sensor (64; 66) measuring a speed of the first shaft (40);
a fan shaft sensor (72) measuring a speed of the fan shaft (86); and
a controller (74) configured to utilize measurements of a first speed of the first shaft (40) from the first sensor (64, 66), a second speed of the fan shaft (86) driven by the geared architecture (48) and rotating at a speed different than the first shaft (40) for determining that one of the first shaft (40) and the fan shaft (86) are outside a predefined deformation limits responsive to a difference between an actual difference between the first and second speeds and a calculated expected difference between speeds of the first shaft (40) and the fan shaft (86), and the controller (74) configured to utilize measurements of a second speed of the second rotating shaft (50) at more than one location and configured to determine a deformation beyond the predefined limit in the second rotating shaft (50) responsive to a difference in measured speed at the more than one locations exceeding a predetermined range.

7. The turbofan engine (20) as recited in claim 6, wherein the first sensor (66) is mounted at a first location proximate the first shaft (40) aft of a geared architecture (48) and a second sensor (64) measuring rotation of the first shaft (40) is mounted at a second location spaced apart from the first location.

8. The turbofan engine (20) as recited in claim 6 or 7, wherein the controller (74) determines the calculated expected difference between the speed of the first shaft (40) and the fan shaft (86) based on a gear reduction ratio provided by the geared architecture (48).

9. The turbofan engine (20) as recited in claim 6, 7 or 8, wherein the controller (74) initiates shutdown of the turbofan engine (20) responsive to the determination that one of the rotating shaft (40) and the fan shaft (86) are outside predefined deformation limits.

10. The turbofan engine (20) as recited in any of claims 6 to 9, including a second sensor (64) measuring a speed of the first shaft (40) at a location different than the first sensor (66).

11. The method or turbofan engine (20) as recited in any preceding claim, wherein the geared architecture (48) includes a gear reduction ratio greater than about 2.3.

12. The turbofan engine (20) as recited in any of claims 6 to 11, wherein the controller (74) initiates an engine shutdown responsive to determining that one of the first shaft (40) and the fan shaft (86) are outside the predetermined deformation limits.

13. The method or turbofan engine (20) as recited in any preceding claim, wherein the predefined deformation limits comprise predefined torsion limits.

## Patentansprüche

1. Verfahren zum Steuern eines Mantelstromtriebwerks (20), wobei das Mantelstromtriebwerk (20) eine rotierende Welle (40), die eine Turbine (28) mit einem Verdichter (44) koppelt und die einen Lüfter (42) durch eine Getriebearchitektur (48) antreibt, und eine zweite rotierende Welle (50) beinhaltet, die einen Hochdruckverdichter (52) mit einer Hochdruckturbine (54) koppelt, wobei das Verfahren Folgendes umfasst:
Messen einer ersten Geschwindigkeit der rotierenden Welle (40) an einer ersten Stelle hinter der Getriebearchitektur (48);
Messen einer zweiten Geschwindigkeit einer Lüfterantriebswelle (86), die durch die Getriebearchitektur (48) angetrieben wird und die bei einer Geschwindigkeit rotiert, die sich von der rotierenden Welle (40) unterscheidet;
Berechnen eines erwarteten Unterschieds der Geschwindigkeit der rotierenden Welle (40) und der Lüfterantriebswelle (86) auf Grundlage eines Übersetzungsverhältnisses der Getriebearchitektur (48);
Bestimmen, dass sich eine von der rotierenden Welle (40) und der Lüfterantriebswelle (86) außerhalb vordefinierter Verformungsgrenzen befindet, als Reaktion auf einen Unterschied zwischen einem tatsächlichen Unterschied zwischen der ersten und der zweiten Geschwindigkeit und des berechneten erwarteten Unterschieds; und
Erfassen einer Geschwindigkeit der zweiten rotierenden Welle (50) an mehr als einer Stelle und Bestimmen einer Verformung über die vordefinierte Grenze in der zweiten rotierenden Welle (50) hinaus als Reaktion darauf, dass ein Unterschied der gemessen Geschwindigkeit an der mehr als einen Stelle einen vorbestimmten Bereich überschreitet.

2. Verfahren nach Anspruch 1, wobei die rotierende Welle (40) eine Niederspulenwelle umfasst, die eine Niederdruckturbine (44) mit einem Niederdruckverdichter (44) koppelt.

3. Verfahren nach Anspruch 1 oder 2, wobei die rotierende Welle (40) einen Turbinenabschnitt (44) umfasst, der direkt gekoppelt ist, um die Getriebearchitektur (48) anzutreiben.

4. Verfahren nach Anspruch 1, 2 oder 3, das das Messen der ersten Geschwindigkeit der rotierenden Welle (40) an einer zweiten Stelle vor der ersten Stelle beinhaltet.

5. Verfahren nach Anspruch 4, das das Messen der ersten Geschwindigkeit sowohl an der ersten Stelle als auch an der zweiten Stelle und das Bestimmen, dass sich die rotierende Welle (40) außerhalb der vordefinierten Verformungsgrenzen befindet, als Reaktion darauf beinhaltet, dass ein Unterschied der Messungen an der ersten Stelle und der zweiten Stelle einen vorbestimmten Bereich überschreitet.

6. Mantelstromtriebwerk (20), umfassend:
einen Lüfter (42), der eine Lüfterwelle (86) und eine Vielzahl von Lüfterschaufeln beinhaltet, die um eine Achse (A) drehbar sind;
eine Brennkammer (56) in Fluidverbindung mit einem Verdichterabschnitt (44);
einen Turbinenabschnitt (46) in Fluidverbindung mit der Brennkammer (56), wobei der Turbinenabschnitt (46) eine erste Welle (40) antreibt, wobei die erste Welle (40) eine Kopplung zwischen dem Turbinenanschnitt (46) und einem Verdichterabschnitt (44) bereitstellt;
eine zweite rotierende Welle (50), die einen Hochdruckverdichter (52) mit einer Hochdruckturbine (54) koppelt;
eine Getriebearchitektur (48), die durch die erste Welle (40) zum Rotieren des Lüfters (42) um die Achse (A) angetrieben wird;
einen ersten Sensor (64; 66), der eine Geschwindigkeit der ersten Welle (40) misst;
einen Lüfterwellensensor (72), der eine Geschwindigkeit der Lüfterwelle (86) misst; und
eine Steuerung (74), die dazu konfiguriert ist, Messungen einer ersten Geschwindigkeit der ersten Welle (40) von dem ersten Sensor (64, 66) und einer zweiten Geschwindigkeit der Lüfterwelle (86), die durch die Getriebearchitektur (48) angetrieben wird und die bei einer Geschwindigkeit rotiert, die sich von der ersten Welle (40) unterscheidet, zum Bestimmen, dass sich eine von der ersten Welle (40) und der Lüfterwelle (86) außerhalb von vordefinierten Verformungsgrenzen befindet, als Reaktion auf einen Unterschied zwischen einem tatsächlichen Unterschied zwischen der ersten und der zweiten Geschwindigkeit und einem berechneten erwarteten Unterschied zwischen den Geschwindigkeiten der ersten Welle (40) und der Lüfterwelle (86) zu nutzen, und wobei die Steuerung (74) dazu konfiguriert ist, Messungen einer zweiten Geschwindigkeit einer zweiten rotierenden Welle (50) an mehr als einer Stelle zu nutzen, und dazu konfiguriert ist, eine Verformung über die vordefinierte Grenze in der zweiten rotierenden Welle (50) hinaus als Reaktion darauf zu bestimmen, dass ein Unterschied der gemessenen Geschwindigkeit an der mehr als einen Stelle einen vorbestimmten Bereich überschreitet.

7. Mantelstromtriebwerk (20) nach Anspruch 6, wobei der erste Sensor (66) an einer ersten Stelle in der Nähe der ersten Welle (40) hinter einer Getriebearchitektur (48) angebracht ist und ein zweiter Sensor (64), der eine Rotation der ersten Welle (40) misst, an einer zweiten Stelle angebracht ist, die von der ersten Stelle beabstandet ist.

8. Mantelstromtriebwerk (20) nach Anspruch 6 oder 7, wobei die Steuerung (74) den berechneten erwarteten Unterschied zwischen der Geschwindigkeit der ersten Welle (40) und der Lüfterwelle (86) auf Grundlage eines Übersetzungsverhältnisses bestimmt, das durch die Getriebearchitektur (48) bereitgestellt ist.

9. Mantelstromtriebwerk (20) nach Anspruch 6, 7 oder 8, wobei die Steuerung (74) als Reaktion auf das Bestimmen, dass sich eine von der rotierenden Welle (40) und der Lüfterwelle (86) außerhalb vordefinierter Verformungsgrenzen befindet, eine Abschaltung des Mantelstromtriebwerks (20) initiiert.

10. Mantelstromgetriebe (20) nach einem der Ansprüche 6 bis 9, das einen zweiten Sensor (64) beinhaltet, der eine Geschwindigkeit der ersten Welle (40) an einer Stelle misst, die sich von dem ersten Sensor (66) unterscheidet.

11. Verfahren oder Mantelstromgetriebe (20) nach einem der vorhergehenden Ansprüche, wobei die Getriebearchitektur (48) ein Untersetzungsverhältnis größer 2,3 beinhaltet.

12. Mantelstromgetriebe (20) nach einem der Ansprüche 6 bis 11, wobei die Steuerung (74) als Reaktion auf das Bestimmen, dass sich eine von der ersten Welle (40) und der Lüfterwelle (86) außerhalb der vorbestimmten Verformungsgrenzen befindet, eine Triebwerksabschaltung initiiert.

13. Verfahren oder Mantelstromgetriebe (20) nach einem der vorhergehenden Ansprüche, wobei die vordefinierten Verformungsgrenzen vordefinierte Verdrehungsgrenzen umfassen.

## Revendications

1. Procédé de commande d'un moteur à double flux (20), le moteur à double flux (20) comportant un arbre rotatif (40) couplant une turbine (28) à un compresseur (44) et entraînant une soufflante (42) par l'intermédiaire d'une architecture à engrenages (48) et un second arbre rotatif (50) couplant un compresseur haute pression (52) à une turbine haute pression (54), le procédé comprenant :
la mesure d'une première vitesse de l'arbre rotatif (40) au niveau d'un premier emplacement à l'arrière de l'architecture à engrenages (48) ;
la mesure d'une seconde vitesse d'un arbre d'entraînement de soufflante (86) entraîné par l'architecture à engrenages (48) et tournant à une vitesse différente de celle de l'arbre rotatif (40) ;
le calcul d'une différence attendue de la vitesse de l'arbre rotatif (40) et de l'arbre d'entraînement de soufflante (86) sur la base d'un rapport d'engrenage de l'architecture à engrenages (48) ;
la détermination que l'un parmi l'arbre rotatif (40) et l'arbre d'entraînement de soufflante (86) se situe en dehors de limites de déformation prédéfinies en réponse à une différence entre une différence réelle entre les première et seconde vitesses et la différence attendue calculée ; et
la détection d'une vitesse du second arbre rotatif (50) au niveau de plusieurs emplacements et la détermination d'une déformation au-delà de la limite prédéfinie dans le second arbre rotatif (50) en réponse à une différence de la vitesse mesurée au niveau des plusieurs emplacements dépassant une plage prédéterminée.

2. Procédé selon la revendication 1, dans lequel l'arbre rotatif (40) comprend un arbre de bobine basse couplant une turbine basse pression (44) à un compresseur basse pression (44) .

3. Procédé selon la revendication 1 ou 2, dans lequel l'arbre rotatif (40) comprend une section de turbine (44) directement couplée pour entraîner l'architecture à engrenages (48) .

4. Procédé selon la revendication 1, 2 ou 3, comportant la mesure de la première vitesse de l'arbre rotatif (40) au niveau d'un second emplacement à l'avant du premier emplacement.

5. Procédé selon la revendication 4, comportant la mesure de la première vitesse à la fois au niveau du premier emplacement et du second emplacement, et la détermination que l'arbre rotatif (40) se situe en dehors des limites de déformation prédéfinies en réponse à une différence de mesures au niveau du premier emplacement et du second emplacement dépassant une plage prédéterminée.

6. Moteur à double flux (20) comprenant :
une soufflante (42) comportant un arbre de soufflante (86) et une pluralité d'aubes de soufflante pouvant tourner autour d'un axe (A) ;
une chambre de combustion (56) en communication fluidique avec une section de compresseur (44) ;
une section de turbine (46) en communication fluidique avec la chambre de combustion (56), la section de turbine (46) entraînant un premier arbre (40) avec le premier arbre (40) fournissant un couplage entre la section de turbine (46) et une section de compresseur (44) ;
un second arbre rotatif (50) couplant un compresseur haute pression (52) à une turbine haute pression (54) ;
une architecture à engrenages (48) entraînée par le premier arbre (40) pour faire tourner la soufflante (42) autour de l'axe (A) ;
un premier capteur (64 ; 66) mesurant une vitesse du premier arbre (40) ;
un capteur d'arbre de soufflante (72) mesurant une vitesse de l'arbre de soufflante (86) ; et
un dispositif de commande (74) configuré pour utiliser des mesures d'une première vitesse du premier arbre (40) à partir du premier capteur (64, 66), d'une seconde vitesse de l'arbre de soufflante (86) entraîné par l'architecture à engrenages (48) et tournant à une vitesse différente de celle du premier arbre (40) pour déterminer que l'un parmi le premier arbre (40) et l'arbre de soufflante (86) se situe en dehors d'une limite de déformation prédéfinie en réponse à une différence entre une différence réelle entre les première et seconde vitesses et une différence attendue calculée entre des vitesses du premier arbre (40) et de l'arbre de soufflante (86), et le dispositif de soufflante (74) étant configuré pour utiliser des mesures d'une seconde vitesse du second arbre rotatif (50) au niveau de plusieurs emplacements et étant configuré pour déterminer une déformation au-delà de la limite prédéfinie dans le second arbre rotatif (50) en réponse à une différence de vitesse mesurée au niveau des plusieurs emplacements dépassant une plage prédéterminée.

7. Moteur à double flux (20) selon la revendication 6, dans lequel le premier capteur (66) est monté au niveau d'un premier emplacement à proximité du premier arbre (40) à l'arrière d'une architecture à engrenages (48) et un second capteur (64) mesurant la rotation du premier arbre (40) est monté au niveau d'un second emplacement espacé du premier emplacement.

8. Moteur à double flux (20) selon la revendication 6 ou 7, dans lequel le dispositif de commande (74) détermine la différence attendue calculée entre la vitesse du premier arbre (40) et l'arbre de soufflante (86) sur la base d'un rapport de réduction d'engrenage fourni par l'architecture à engrenages (48) .

9. Moteur à double flux (20) selon la revendication 6, 7 ou 8, dans lequel le dispositif de commande (74) déclenche l'arrêt du moteur à double flux (20) en réponse à la détermination que l'un parmi l'arbre rotatif (40) et l'arbre de soufflante (86) se situe en dehors de limites de déformation prédéfinies.

10. Moteur à double flux (20) selon l'une quelconque des revendications 6 à 9, comportant un second capteur (64) mesurant une vitesse du premier arbre (40) au niveau d'un emplacement différent du premier capteur (66).

11. Procédé ou moteur à double flux (20) selon une quelconque revendication précédente, dans lequel l'architecture à engrenages (48) comporte un rapport de réduction d'engrenage supérieur à environ 2,3.

12. Moteur à double flux (20) selon l'une quelconque des revendications 6 à 11, dans lequel le dispositif de commande (74) déclenche un arrêt du moteur en réponse à la détermination que l'un parmi le premier arbre (40) et l'arbre de soufflante (86) se situe en dehors des limites de déformation prédéterminées.

13. Procédé ou moteur à double flux (20) selon une quelconque revendication précédente, dans lequel les limites de déformation prédéfinies comprennent des limites de torsion prédéfinies.
